# EUROPÄISCHE PATENTSCHRIFT

(11) **EP 2 252 780 B1**
(45) Veröffentlichungstag und Bekanntmachung des Hinweises auf die Patenterteilung: **27.04.2011**
(21) Anmeldenummer: 09722460.4
(22) Anmeldetag: 06.03.2009
(51) Int. Cl.: F01N 9/00

(54) **VERFAHREN ZUM BESTIMMEN DES BELADUNGSZUSTANDES EINES IN DEN ABGASSTRANG EINER BRENNKRAFTMASCHINE EINGESCHALTETEN PARTIKELFILTERS SOWIE EINRICHTUNG ZUM REDUZIEREN DER PARTIKELEMISSION EINER BRENNKRAFTMASCHINE**
METHOD FOR DETERMINING THE CHARGE STATE OF A PARTICLE FILTER INSTALLED IN THE EXHAUST GAS LINE OF AN INTERNAL COMBUSTION ENGINE AND DEVICE FOR REDUCING THE PARTICLE EMISSIONS OF AN INTERNAL COMBUSTION ENGINE
PROCÉDÉ POUR DÉTERMINER L'ÉTAT DE CHARGE D'UN FILTRE À PARTICULES MONTÉ DANS LE TUYAU DE GAZ D'ÉCHAPPEMENT D'UN MOTEUR À COMBUSTION INTERNE AINSI QUE DISPOSITIF DE RÉDUCTION DE L'ÉMISSION DE PARTICULES POUR UN MOTEUR À COMBUSTION INTERNE

(30) Priorität: 15.03.2008 DE 102008014528
(43) Veröffentlichungstag der Anmeldung: 24.11.2010
(73) Patentinhaber: HJS Emission Technology GmbH & Co. KG, 58706 Menden (DE)
(72) Erfinder: SCHREWE, Klaus, 59602 Rüthen (DE); MANDT, Rüdiger, 58339 Breckerfeld (DE)
(74) Vertreter: Haverkamp, Jens
(86) Internationale Anmeldenummer: PCT/EP2009/052663
(87) Internationale Veröffentlichungsnummer: WO 2009/115415

(56) Entgegenhaltungen:
- US-A1- 2007 137 150
- US-A1- 2007 227 126
- US-A1- 2008 053 074

## Beschreibung

Die Erfindung betrifft ein Verfahren zum Bestimmen des Beladungszustandes eines in den Abgasstrang einer Brennkraftmaschine insbesondere eines Dieselmotors eingeschalteten Partikelfilters. Ferner betrifft die Erfindung eine Einrichtung zum Reduzieren der Partikelemission einer Brennkraftmaschine, gemäß dem Oberbegriff des Anspruchs 9.

In den Abgasstrang von Dieselmotoren werden Partikelfilter zum Auffangen von in dem Abgasstrom transportierten Feststoffteilchen, insbesondere Rußpartikeln eingeschaltet. Ein solcher Partikelfilter muss in zeitlichen Intervallen gereinigt werden, damit durch den auf dem Partikelfilter akkumulierten Ruß der Abgasgegendruck nicht übermäßig ansteigt und dadurch die Leistungsfähigkeit des Dieselmotors beeinträchtigt wird. Zum Befreien der anströmseitigen Oberfläche des Partikelfilters von den akkumulierten Rußpartikeln wird entweder aktiv eine Rußoxidation - ein so genannter Rußabbrand - ausgelöst oder dieser tritt bei Vorliegen geeigneter Bedingungen von selbst ein. Letzteres ist der Fall, wenn die den Partikelfilter anströmende Abgastemperatur größer ist als die Rußzündtemperatur und in dem Abgasstrom eine ausreichende Sauerstoffmenge transportiert wird.

Bei Konzeption einer Partikelfilterregeneration durch aktives Auslösen der Rußoxidation soll diese erst dann ausgelöst werden, wenn der Partikelfilter einen bestimmten Beladungszustand aufweist, damit gewährleistet ist, dass aufgrund der Vorhandenseins einer ausreichenden, auf der anströmseitigen Oberfläche des Partikelfilters akkumulierten Rußmenge die gewünschte Oxidation auch bestimmungsgemäß abläuft. Wird der Rußoxidationsprozess bei einer zu geringen Rußbeladung des Partikelfilters ausgelöst, kann die Rußoxidation unvollständig erfolgen mit dem Ergebnis, dass der Ruß in einigen Bereichen des Partikelfilters nicht oxidiert wird. Infolge dessen erhöht sich der durch die Partikel hervorgerufene Abgasgegendruck, was sich nachteilig auf die Wirtschaftlichkeit und die Leistungsfähigkeit des Dieselmotors auswirkt. Aus diesem Grunde erfolgt im Zusammenhang mit aktiven Regenerationsverfahren üblicherweise eine Bestimmung des Beladungszustandes des Partikelfilters, bevor eine Filterregeneration ausgelöst wird. Zur Beladungszustandserfassung des Partikelfilters wird typischer Weise der Druck im Abgasstrom vor und hinter dem Partikelfilter erfasst. Aus der Druckdifferenz und der der Brennkraftmaschine zugeführten Luft- und Kraftstoffmenge kann in Abhängigkeit von den entsprechenden Kennlinien der Brennkraftmaschine der aktuelle Beladungszustand der Partikelfilters ermittelt werden. Um auf diesem Wege den Beladungszustand eines in den Abgasstrang einer Brennkraftmaschine, insbesondere eines Dieselmotors eingeschalteten Partikelfilters zu bestimmen, werden Motorkenndaten benötigt. Daher eignet sich dieses Verfahren nicht oder nur eingeschränkt bei Nachrüstlösungen oder für Kleinserien, da in jedem System eine Anpassung an die jeweiligen Motorkenndaten gegeben sein muss. Überdies wird mitunter bei diesem Verfahren als nachteilig angesehen, dass die der Brennkraftmaschine für den Verbrennungsprozess zugeführte Luftmenge erfasst werden muss, da nicht immer ausreichend Raum zur Verfügung steht, um ein solches Luftvolumenstrommessgerät anordnen zu können.

US 2008/0053074 A offenbart ein Verfahren zum Bestimmen des Beladungszustandes eines in den Abgasstrang einer Brennkraftmaschine, insbesondere eines Dieselmotors eingeschalteten Partikelfilters. Gemäß diesem Verfahren werden folgende Schritte ausgeführt:
- In einem ersten Schritt wird der Abgasvolumenstrom in Strömungsrichtung des Abgases hinter dem Partikelfilter bestimmt.
- Zudem wird der im Abgasstrang in Strömungsrichtung des Abgases vor dem Partikelfilter herrschende Druck erfasst.

Die auf diese Weise bestimmten Größen werden unabhängig voneinander ausgewertet.

Ausgehend von diesem diskutierten Stand der Technik liegt der Erfindung daher die Aufgabe zugrunde, ein eingangs genanntes Verfahren sowie eine eingangs genannte Einrichtung dergestalt aus- bzw. weiterzubilden, dass der Beladungszustand eines in den Abgasstrang einer Brennkraftmaschine eingeschalteten Partikelfilters auch unabhängig von dem Vorhandensein von Motorkenndaten und einer Erfassung der der Brennkraftmaschine zugeführten Luftmenge möglich ist.

Diese Aufgabe wird erfindungsgemäß durch ein eingangs genanntes Verfahren mit folgenden Schritten gelöst:
- Bestimmen des Abgasvolumenstroms in Strömungsrichtung des Abgases hinter dem Partikelfilter,
- Erfassen des im Abgasstrang in Strömungsrichtung des Abgases vor dem Partikelfilter herrschenden Druckes,
- Vergleichen des in Strömungsrichtung hinter dem Partikelfilter bestimmten Abgasvolumenstroms mit dem erfassten vor dem Partikelfilter herrschenden Druck und
- Auswerten des Ergebnisses des Vergleichs unter Berücksichtigung des Abgasgegendrucks des unbeladenen Partikelfilters und den durch eine Partikelfilterbeladung verursachten, gegenüber dem unbeladenen Filter höheren Abgasgegendruck.

Die einrichtungsbezogene Aufgabe wird durch eine eingangs genannte, gattungsgemäße Einrichtung mit den Merkmalen des Anspruchs 9 gelöst.
ter herrschenden Druck und
- Auswerten des Ergebnisses des Vergleichs unter Berücksichtigung des Abgasgegendrucks des unbeladenen Partikelfilters und den durch eine Partikelfilterbeladung verursachten, gegenüber dem unbeladenen Filter höheren Abgasgegendruck.

Die einrichtungsbezogene Aufgabe wird durch eine eingangs genannte, gattungsgemäße Einrichtung gelöst, bei der die Beladungszustandsbestimmungseinrichtung über einen im Abgasstrang in Strömungsrichtung des Abgases vor dem Partikelfilter angeordneten Drucksensor zum Erfassen des im Abgasstrang herrschenden Druckes sowie über einen in Strömungsrichtung des Abgases hinter dem Partikelfilter angeordneten Volumenstromsensor verfügt, welche beiden Sensoren zur Auswertung der Messergebnisses an eine Steuereinheit angeschlossen sind.

Bei diesem Verfahren - gleiches gilt für die vorbeschriebene Einrichtung - erfolgt eine Volumenstrommessung bzw. -bestimmung innerhalb des Abgasstromes und zwar in Strömungsrichtung des Abgases hinter dem Partikelfilter. Das Anordnen des Volumenstrommesssensors innerhalb des Abgasstranges hat zum Vorteil, dass für diesen kaum zusätzlicher Bauraum benötigt wird. Darüber hinaus unterliegt der Volumenstrommesssensor bzw. sein Messkörper durch seine Anordnung hinter dem Partikelfilter nicht einer Verschmutzung. Dieser ist durch den vorgeschalteten Partikelfilter vor Verschmutzungen geschützt. Vorzugsweise zeitgleich oder quasi zeitgleich erfolgt mit der Bestimmung des Abgasvolumenstroms hinter dem Partikelfilter ein Erfassen des vor dem Partikelfilter im Abgasstrang herrschenden Druckes. Durch einen Vergleich der erhaltenen Messwerte, wobei durch die Bestimmung des Abgasvolumenstroms hinter dem Partikelfilter nicht nur der Abgasvolumenstrom bestimmt, sondern im Zuge dessen auch der statische Druck erfasst wird, lässt sich der durch den Partikelfilter mit seiner Beladung bereit gestellte Abgasgegendruck ermitteln. Dieses Ergebnis wird ausgewertet unter Berücksichtigung des durch den Partikelfilter in seinem unbeladenen Zustand bereitgestellten Abgasgegendruckes. Bei dieser Größe handelt es sich um eine Partikelfilter spezifische, bekannte Größe. Die Auswertung erfolgt unter Berücksichtigung dieses Wertes im Hinblick auf den der Partikelfilterbeladung zuzurechnenden Abgasgegendruckanteil. Berücksichtigt wird hierbei, dass bei einer Partikelfilterbeladung mit Ruß der durch den Partikelfilter bereitgestellte Abgasgegendruck größer ist als bei unbeladenem Partikelfilter. Dieser Abgasgegendruckanteil ist wiederum ein Maß für die Beladung des Partikelfilters und damit für die auf der anströmseitigen Oberfläche des Partikelfilters akkumulierte Rußmenge. Somit kann auf diese Weise eine Beladungszustandsbestimmung durchgeführt werden, ohne dass Motorkenndaten oder eine Volumenstrombestimmung des der Brennkraftmaschine zugeführten Luftstromes notwendig ist. Um für eine solche Auswertung Messwerte zur Verfügung zu haben, die ein und demselben Filterbeladungszustand zugeordnet werden können, werden die Volumenstromerfassung und die Druckerfassung vorzugsweise zeitgleich oder quasi zeitgleich durchgeführt, in jedem Fall zweckmäßigerweise nur in einem solchen zeitlichen Abstand voneinander, in dem entsprechend der dem jeweiligen Betriebszustand der Brennkraftmaschine entsprechenden Rußakkumulationsrate von einer im Wesentlichen unveränderten Rußbeladung ausgegangen werden kann.

Als Korrekturgröße geht in die Auswertung der dem unbeladenen Partikelfilter zugeordnete Abgasgegendruck ein. Da sich diese etwa durch Ascheansammlungen infolge von durchgeführten Filterregenerationsprozessen über die Zeit ändern kann, kann vorgesehen sein, diese in zeitlichen Abständen oder an bestimmte Betriebszustände gekoppelt zu korrigieren oder neu zu eichen.

Um eine gewisse Messwertredundanz und dadurch eine bessere Qualität des Ergebnisses der Beladungszustandsbestimmung zu erreichen, kann vorgesehen sein, dass vor der Auswertung mehrere Abgasvolumenbestimmungen und entsprechend mehrere Druckbestimmungen durchgeführt werden, wobei in die Auswertung jeweils die Mittelwerte oder auch gewichtete Mittelwerte eingehen. Eine Wichtung der Mittelwerte kann in Abhängigkeit von dem ermittelten Abgasvolumenstrom erfolgen, da bei höherem Abgasvolumenstrom, also beispielsweise bei einem Lastbetrieb der Brennkraftmaschine eine höhere Messgenauigkeit erzielt werden kann. Gleichfalls ist es möglich, mehrere Auswertungen vorzunehmen und in die Entscheidungsfindung zum Auslösen bestimmter Aktionen deren Mittelwert oder gewichteten Mittelwert eingehen zu lassen.

Neben der Abgasvolumenstrombestimmung und der Druckmessung wird vorzugsweise auch eine Temperaturerfassung durchgeführt, um die erhaltenen Messwerte im Hinblick auf die im Abgasstrang herrschende Temperatur korrigieren zu können.

Das beschriebene Verfahren und die beschriebene Einrichtung eignen sich zum Einsatz im Rahmen aktiver Partikelfilterregenerationsstrategien. Gleichfalls lässt sich dieses Verfahren oder diese Einrichtung auch zur Überprüfung oder Überwachung des Beladungszustandes von Partikelfiltern bei passiven Regenerationsstrategien einsetzen.

Nachfolgend ist die Erfindung anhand eines Ausführungsbeispiels unter Bezugnahme auf die beigefügten Figuren beschrieben. Es zeigen:
- **Fig. 1:**: Ein schematisierter Längsschnitt durch den Abgasstrang ei- nes Dieselmotors mit einem Partikelfilter und einer Einrich- tung zum Bestimmen des Beladungszustandes des Partikel- filters und
- **Fig. 2:**: ein Querschnitt durch den Abgasstrang entlang der Linie A - B.

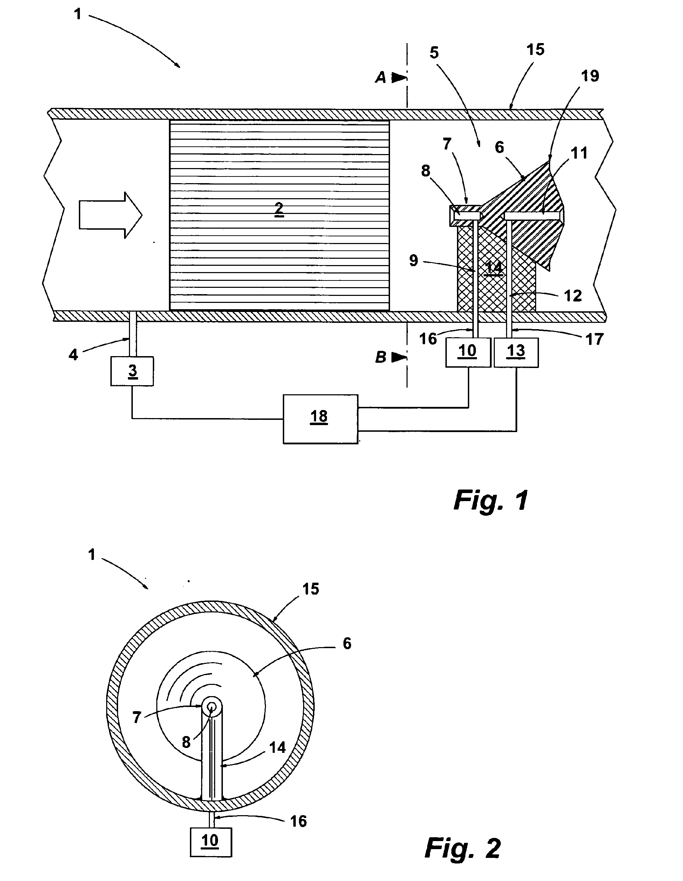

In einem Abgasstrang 1, von dem in Figur 1 lediglich ein Ausschnitt wiedergegeben ist und welcher Abgasstrang an einen Dieselmotor angeschlossen ist, ist ein Partikelfilter 2 angeordnet. Der Partikelfilter 2 dient zum Filtern der von dem Dieselmotor emittierten Abgase. Zurückgehalten werden von dem Partikelfilter 2 in dem Abgasstrom befindliche Feststoffteilchen, insbesondere Rußpartikel. Derartige Filter sind hinlänglich bekannt.

Um den Partikelfilter 2 in zeitlichen Abständen durch Einleiten einer Rußoxidation zu regenerieren, ist dem Abgasstrang 1 eine Einrichtung zum Bestimmen des Beladungszustands des Partikelfilters 2 zugeordnet. Diese Einrichtung dient somit zum Bestimmen der auf der anströmseitigen Oberfläche des Partikelfilters akkumulierten Rußmenge. Diese Einrichtung umfasst einen Drucksensor 3, der in Strömungsrichtung des Abgases (durch den Blockpfeil in Figur 1 angedeutet) dem Partikelfilter 2 vorgeschaltet ist. Der Drucksensor 3 ist angeordnet, um den statischen Druck in dem vor dem Partikelfilter 2 befindlichen Teil des Abgasstranges zu messen. Daher ist der Drucksensor 3 selbst außerhalb des Abgasstranges angeordnet und steht mit diesem über ein in den Abgasstrang mündendes Messrohr 4 in Verbindung. Die Beladungszustandsbestimmungseinrichtung umfasst des Weiteren in Strömungsrichtung des Abgases dem Partikelfilter 2 nachgeschalteten einen Volumenstromsensor 5. Der Volumenstromsensor 5 verfügt über einen als Messkörper dienenden Messkonus 6, in dem zwei Messstellen angeordnet sind. Bei dem Messkonus 6 handelt es sich bei dem dargestellten Ausführungsbeispiel um einen rotationssymmetrischen Körper, der in Figur 1 in einem Längsschnitt gezeigt ist. Der Messkonus 6 verfügt über einen an den eigentlichen Konus, der, wie aus Figur 1 erkennbar, entgegen der Strömungsrichtung des Abgases geneigt ist, über einen zylindrischen Fortsatz 7. In diesen ist eine Sackbohrung 8 eingebracht, die wiederum über einen Messkanal 9 mit einem Drucksensor 10 in Verbindung steht. Der Drucksensor 10 dient zum Erfassen des sich bei strömendem Abgas in der Sackbohrung 8 ausbildenden Staudruckes und damit zum Erfassen des durch den Abgasstrom bereitgestellten Gesamtdruckes. Mündend in den abströmseitigen Bereich des Messkonus 7 ist eine weitere Sackbohrung 11 eingebracht. Diese ist über einen Messkanal 12 an einen weiteren Drucksensor 13 angeschlossen. Da sich die innerhalb der Sackbohrung 11 befindliche Messstelle des Drucksensors 13 im Strömungsschatten des den Abgasstrang durchströmenden Abgases befindet, wird an dieser der abströmseitig bezüglich des Partikelfilters 2 herrschende statische Druck gemessen.

Der Messkörper 6 ist bei dem dargestellten Ausführungsbeispiel über einen Tragekörper 14 an dem den Abgasstrang 1 in dem gezeigten Abschnitt bildenden Rohr 15 gehalten. Der Tragekörper 14 ist mit der Innenseite des Rohrs 15 verschweißt. In den Tragekörper 14 sind zwei die Messkanäle 9, 12 bildende Bohrungen angeordnet. Die Messkanäle 12, 13 setzen sich außerhalb des Rohres 15 jeweils fort in Messrohre 16 bzw. 17, bevor der eigentliche Drucksensor 10 bzw. 13 angeschlossen ist. Die Drucksensoren 3, 10, 13 sind sämtlich außerhalb des Abgasstranges 1 angeordnet und beaufschlagen mit ihren Messsignalen eine Steuereinheit 18, typischer Weise einen Mikroprozessor. Die Steuereinheit 18 wertet die von den Drucksensoren 3, 10, 13 erhaltenen Messwerte gemäß einem vorbestimmten Algorithmus aus. Zusätzlich ist an das Steuergerät 18 eine in Figur 1 nicht dargestellte Temperaturmesseinrichtung angeschlossen, mit der die im Abgasstrang 1 herrschende Temperatur erfasst wird. Die Temperatur wird als Korrekturgröße im Rahmen der Auswertung der erhaltenden Messwerte verwendet.

Der in Figur 1 dargestellte Messkonus 6 verfügt über eine strömungstechnisch wirksame Abrisskante 19. Diese dient zur Wirbelerzeugung und unterstützt somit positiv die Messwertgewinnung durch den Volumenstromsensor 5, und zwar hinsichtlich der der Sackbohrung 11 zugeordneten Messstelle zum Erfassen des statischen Drucks.

In dem in Figur 2 gezeigten Querschnitt ist die Aufhängung des Konuskörpers 6 innerhalb des Rohrs 15 erkennbar.

Zum Bestimmen des Beladungszustandes des Partikelfilters 2 wird mit dem Drucksensor 3 der innerhalb des Abgasstranges 1 vor dem Partikelfilter 2 herrschende statische Druck erfasst. Zeitgleich oder quasi gleichzeitig wird mit dem Volumenstromsensor 5 eine Abgasstromvolumenmessung durchgeführt. Dieses erfolgt durch Erfassen des Gesamtdruckes mit dem Drucksensor 10 und des statischen Druckes mit dem Drucksensor 13. Unter der Voraussetzung, dass innerhalb des Abgasstroms vor und hinter dem Partikelfilter ein energetisch gleiches Niveau herrscht, können die ermittelten Messwerte vor dem Partikelfilter 2 und hinter demselben unmittelbar miteinander verglichen werden. Ausgewertet wird das Vergleichsergebnis, welches beispielsweise im Zuge einer Subtraktion ermittelt wird im Hinblick auf den durch den Partikelfilter 2 und seine Rußbeladung erzeugten Abgasgegendruck. Da der Abgasgegendruck des unbeladenen Partikelfilters 2 bekannt ist, kann ohne weiteres der der Rußbeladung zuzuordnende Anteil des erfassten Abgasgegendruckes bestimmt werden. Da der Beladung des Partikelfilters 2 zuzuordnende Abgasgegendruck proportional zu der an auf der Anströmseite des Partikelfilters 2 akkumulierten Rußmenge ist, erhält man auf diese Weise einen die akkumulierte Rußmenge widerspiegelnden Wert. Je nach Einsatz der Beladungszustandsbestimmungseinrichtung im Rahmen des verwendeten Abgasreinigungssystems können in Abhängigkeit von dem ermittelten Beladungszustand Aktionen durch die Steuereinheit 18 ausgelöst werden oder nicht. Bei dem in Figur 1 gezeigten Ausführungsbeispiel ist in nicht dargestellter Art und Weise an die Steuereinheit 8 eine Heizeinrichtung angeschlossen, mit der anströmseitig die Temperatur zum Auslösen einer Filterregeneration erhöht werden kann. Überschreitet der erfasste Beladungszustand des Partikelfilters einen vorgegebenen Schwellwert, wird diese Heizeinrichtung angesteuert, mit der Folge, dass dann der gewünschte Rußabbrand erfolgt und der Partikelfilter 2 regeneriert. Dabei ist der Schwellwert so gewählt, dass bei Überschreiten desselben gewährleistet ist, dass eine vollständige Filterregeneration mit hoher Wahrscheinlichkeit erfolgen wird. Gemäß dem vorbeschriebenen Ausführungsbeispiel wird bei Feststellen einer hinreichenden Rußbeladung unmittelbar eine Filterregeneration gestartet. Damit stellt das Signal der Auswerteeinheit nach Feststellen dieses Beladungszustandes ein Regenerationssignal dar. Gemäß einer alternativen Ausgestaltung kann vorgesehen sein, dass neben dem durch dieses Verfahren bereitgestellten Regenerationssignal entsprechende Signale weiterer, auf das Auslösen einer Rußregeneration Einfluss nehmende Parameter, wie beispielsweise der aktuelle Betriebszustand des Motors oder das aktuelle Fahrprofil in die Auswertung einbezogen werden.

Der in die Auswertung eingehende Abgasgegendruckwert des unbeladenen Partikelfilters ändert sich im Zuge der Betriebsdauer der Abgasreinigungsanlage. Da sich dieser insbesondere durch infolge sukzessiver Ascheakkumulation erhöht, kann im Anschluss an einzelne oder auch an jede Filterregeneration eine weitere Beladungszustandsbestimmung durchgeführt werden, um einen aktuellen Abgasgegendruckwert des regenerierten und somit unbeladenen Partikelfilters zu erhalten. Somit ist im Rahmen dieser Ausführungen unter dem Begriff "unbeladener Partikelfilter" nicht nur der fabrikneue Partikelfilter und der von diesem bereitgestellte Abgasgegendruck zu verstehen, sondern auch der Partikelfilter, dessen Abgasgegendruck durch Ascheeinlagerungen im Zuge seiner Lebensdauer erhöht ist. Eine solche Kalibrierung kann je nach Ausgestaltung des Abgasreinigungssystems und/oder der Abgasreinigungsstrategie auf solche Filterregenerationen beschränkt sein, bei denen systemseitig mit einer sehr hohen Wahrscheinlichkeit darauf geschlossen werden kann, dass die Filterregeneration vollständig abgelaufen und mithin der gesamte oder quasi der gesamte, auf der anströmseitigen Oberfläche des Partikelfilters akkumulierte Ruß oxidiert worden ist.

In den Figuren ist im Wege eines Beispiels lediglich eine Ausgestaltung der Erfindung beschrieben. Auch andere Ausgestaltungen sind denkbar, insbesondere hinsichtlich der Ausbildung des Volumenstromsensors bzw. seines Messkörpers. Daher kann ohne Weiteres anstelle des in den Figu ren gezeigten Messkonus 6 auch ein Blechkörper eingesetzt werden, durch den eine Staudruckmessstelle und eine im Strömungsschatten befindliche Messstelle für den statischen Druck bereitgestellt ist.

Die Beschreibung der Erfindung macht deutlich, dass sich das beschriebene Verfahren sowie die beschriebene Einrichtung insbesondere auch bei solchen Dieselbrennkraftmaschinen in den Abgasstrang implementiert werden können, bei denen eine Schnittstelle zu dem Motormanagement und/oder zur Erfassung von motorspezifischen Kenngrößen nicht vorhanden oder nicht möglich ist. Somit handelt es sich bei diesem Verfahren und bei dieser Einrichtung um Systeme, die autark betrieben werden können. Dieses ist ein Grund dafür, weshalb dieses Verfahren und diese Einrichtung insbesondere zur Nachrüstung oder auch für Brennkraftmaschinen von Arbeitsmaschinen geeignet sind.

### Bezugszeichenliste

- 1: Abgasstrang
- 2: Partikelfilter
- 3: Drucksensor
- 4: Messrohr
- 5: Volumenstromsensor
- 6: Messkonus
- 7: zylindrischer Fortsatz
- 8: Sackbohrung
- 9: Messkanal
- 10: Drucksensor
- 11: Sackbohrung
- 12: Messkanal
- 13: Drucksensor
- 14: Tragekörper
- 15: Rohr
- 16: Messrohr
- 17: Messrohr
- 18: Steuereinheit
- 19: Abrisskante

## Patentansprüche

1. Verfahren zum Bestimmen des Beladungszustandes eines in den Abgasstrang einer Brennkraftmaschine insbesondere eines Dieselmotors eingeschalteten Partikelfilters (2), **gekennzeichnet durch** folgende Schritte:
- Bestimmen des Abgasvolumenstroms in Strömungsrichtung des Abgases hinter dem Partikelfilter (2),
- Erfassen des im Abgasstrang (1) in Strömungsrichtung des Abgases vor dem Partikelfilter (2) herrschenden Druckes,
- Vergleichen des in Strömungsrichtung hinter dem Partikelfilter (2) bestimmten Abgasvolumenstroms mit dem erfassten, vor dem Partikelfilter (2) herrschenden Druck und
- Auswerten des Ergebnisses des Vergleichs unter Berücksichtigung des Abgasgegendrucks des unbeladenen Partikelfilters (2) und den **durch** eine Partikelfilterbeladung verursachten, gegenüber dem unbeladenen Filter höheren Abgasgegendruck.

2. Verfahren nach Anspruch 1, **dadurch gekennzeichnet, dass** die Bestimmung des Abgasvolumenstroms in Strömungsrichtung des Abgases hinter dem Partikelfilter (2) und das Erfassen des im Abgasstrang (1) in Strömungsrichtung des Abgases vor dem Partikelfilter (2) herrschenden Druckes zeitgleich oder quasi zeitgleich erfolgt.

3. Verfahren nach Anspruch 1 oder 2, **dadurch gekennzeichnet, dass** zum Bestimmen des Abgasvolumenstroms in Strömungsrichtung des Abgases hinter dem Partikelfilter (2) und/oder zum Erfassen des im Abgasstrang in Strömungsrichtung des Abgases vor dem Partikelfilter (2) herrschenden Druckes jeweils mehrere Messungen in einem definierten Zeitintervall durchgeführt werden und für die nachgeschaltete Auswertung jeweils der Mittelwert verwendet wird.

4. Verfahren nach Anspruch 3, **dadurch gekennzeichnet, dass** in die Auswertung der gewichtete Mittelwert der Messungen eingeht.

5. Verfahren nach einem der Ansprüche 1 bis 4, **dadurch gekennzeichnet, dass** für die Volumenstrombestimmung hinter dem Partikelfilter (2) eine Messung zum Erfassen des Gesamtdruckes und eine Messung zum Erfassen des statischen Druckes durchgeführt wird, wobei aus diesem Messergebnissen der für die Volumenstrombestimmung relevante dynamische Druck bestimmt wird.

6. Verfahren nach einem der Ansprüche 1 bis 5, **dadurch gekennzeichnet, dass** die Ergebnisse der Volumenstrombestimmung hinter dem Partikelfilter (2) und diejenigen der Druckmessung vor dem Partikelfilter (2) temperaturkorrigiert werden.

7. Verfahren nach einem der Ansprüche 1 bis 6, **dadurch gekennzeichnet, dass** bei Feststellen einer hinreichenden Rußbeladung des Partikelfilters ein Regenerationssignal generiert wird.

8. Verfahren nach Anspruch 7, **dadurch gekennzeichnet, dass** ein Regenerationsprozess zum Regenerieren des Partikelfilters erst ausgelöst wird, wenn neben dem der notwendigen Rußbeladung entsprechendem Regenerationssignal ein oder mehrere weitere Rußregenerationsbedingungen erfüllt sind.

9. Einrichtung zum Reduzieren der Partikelemission einer Brennkraftmaschine, insbesondere eines Dieselmotors, umfassend einen in den Abgasstrang (1) der Brennkraftmaschine eingeschalteten Partikelfilter (2) sowie eine Einrichtung zum Bestimmen des Beladungszustandes des Partikelfilters (2) umfassend einen Drucksensor (3) sowie umfassend, einen in Strömungsrichtung des Abgases hinter dem Partikelfilter (2) angeordneten Volumenstromsensor (5) verfügt, welche beiden Sensoren (3, 5) zur Auswertung der Messergebnisses an eine Steuereinheit (18) angeschlossen sind, **dadurch gekennzeichnet, dass** der Drucksensor (3) in Strömungsrichtung des Abgases vor dem Partikelfilter (2) angeordnet und dass der Volumenstromsensor (5) einen im Abgasstrang (1) angeordneten, als Messkonus umfasst, dessen Längsachse parallel zur Längsachse des Abgasstrangs (1) in diesem Abschnitt verläuft und der mit seiner Konusfläche gegen die Strömungsrichtung des Abgases im Abgasstrang (1) weisend angeordnet ist, wobei sich im entgegen der Strömungsrichtung des Abgases befindlichen Konuszentrum eine Messstelle zum Messen des Staudruckes und im Strömungsschatten des Messkonus eine Messstelle zum Messen des statischen Drucks befinden.

10. Einrichtung nach Anspruch 9, **dadurch gekennzeichnet, dass** die Messstellen jeweils über einen Messkanal (9, 12) mit einem außerhalb des Abgasstrangs (1) angeordneten Drucksensor (10, 13) verbunden sind.

11. Einrichtung nach Anspruch 10, **dadurch gekennzeichnet, dass** der Messkonus (6) durch den oder die Messkanäle (9, 12) bildenden Körper (14) innerhalb des Abgasstrangs (1) gehalten ist.

12. Einrichtung nach Anspruch 11, **dadurch gekennzeichnet, dass** die Messkanäle (9, 12) in einem den Messkonus in dem Abgasstrang haltenden Tragekörper (14) angeordnet sind.

13. Einrichtung nach einem der Ansprüche 9 bis 12, **dadurch gekennzeichnet, dass** der Messkonus (6) an seinen den größten Durchmesser bestimmenden radialen Abschluss einen strömungstechnische wirksame Abrisskante (19) aufweist.

## Claims

1. Method for determining the charge state of a particle filter (2) installed in the exhaust gas line of an internal combustion engine, in particular a diesel engine, **characterised by** the following steps:
- determining the exhaust gas volume flow downstream of the particle filter (2) in the flow direction of the exhaust gas,
- detecting the pressure prevailing in the exhaust gas line (1) upstream of the particle filter (2) in the flow direction of the exhaust gas,
- comparing the exhaust gas volume flow determined downstream of the particle filter (2) in the flow direction with the detected pressure prevailing upstream of the particle filter (2), and
- evaluating the result of the comparison while taking account of the exhaust gas backpressure of the uncharged particle filter (2) and the exhaust gas backpressure caused by a particle filter charge, this being higher in comparison to the uncharged filter.

2. Method according to claim 1, **characterised in that** the determination of the exhaust gas volume flow downstream of the particle filter (2) in the flow direction of the exhaust gas and the detection of the pressure prevailing in the exhaust gas line (1) upstream of the particle filter (2) in the flow direction of the exhaust gas take place simultaneously or virtually simultaneously.

3. Method according to claim 1 or 2, **characterised in that**, in order to determine the exhaust gas volume flow downstream of the particle filter (2) in the flow direction of the exhaust gas and/or in order to detect the pressure prevailing in the exhaust gas line upstream of the particle filter (2) in the flow direction of the exhaust gas, in each case a plurality of measurements are carried out at a defined time interval and in each case the mean value is used for the subsequent evaluation.

4. Method according to claim 3, **characterised in that** the weighted mean value of the measurements is used for the evaluation.

5. Method according to any one of claims 1 to 4, **characterised in that**, in order to determine the volume flow downstream of the particle filter (2), a measurement for detecting the total pressure and a measurement for detecting the static pressure is carried out, wherein the dynamic pressure relevant for determining the volume flow is determined from these measurement results.

6. Method according to any one of claims 1 to 5, **characterised in that** the results of the volume flow determination downstream of the particle filter (2) and those of the pressure measurement upstream of the particle filter (2) are temperature-corrected.

7. Method according to any one of claims 1 to 6, **characterised in that**, when a sufficient soot charge of the particle filter is ascertained, a regeneration signal is generated.

8. Method according to claim 7, **characterised in that** a regeneration process for regenerating the particle filter is initiated only if, in addition to the regeneration signal corresponding to the required soot charge, one or more additional soot regeneration conditions are met.

9. Device for reducing the particle emissions of an internal combustion engine, in particular a diesel engine, comprising a particle filter (2) installed in the exhaust gas line (1) of the internal combustion engine and a device for determining the charge state of the particle filter (2), said device comprising a pressure sensor (3) and comprising a volume flow sensor (5) arranged downstream of the particle filter (2) in the flow direction of the exhaust gas, with said two sensors (3, 5) being connected to a control unit (18) for evaluating the measurement results, **characterised in that** the pressure sensor (3) is arranged upstream of the particle filter (2) in the flow direction of the exhaust gas, and **in that** the volume flow sensor (5) comprises a measuring cone arranged in the exhaust gas line (1), the longitudinal axis of said measuring cone running parallel to the longitudinal axis of the exhaust gas line (1) in this section and said measuring cone being arranged with its conical surface facing towards the flow direction of the exhaust gas in the exhaust gas line (1), wherein a measuring point for measuring the dynamic pressure is located in the cone centre located opposite to the flow direction of the exhaust gas, and a measuring point for measuring the static pressure is located in the flow shadow of the measuring cone.

10. Device according to claim 9, **characterised in that** the measuring points are each connected via a measuring channel (9, 12) to a pressure sensor (10, 13) arranged outside the exhaust gas line (1).

11. Device according to claim 10, **characterised in that** the measuring cone (6) is held within the exhaust gas line (1) by bodies (14) forming the measuring channel(s) (9, 12).

12. Device according to claim 11, **characterised in that** the measuring channels (9, 12) are arranged in a support body (14) which holds the measuring cone in the exhaust gas line.

13. Device according to any one of claims 9 to 12, **characterised in that** the measuring cone (6) has a hydrodynamic breakaway edge (19) on its radial end that defines the largest diameter.

## Revendications

1. Procédé pour déterminer l'état de charge d'un filtre à particules (2) monté dans le tuyau de gaz d'échappement d'un moteur à combustion interne, notamment d'un moteur diesel, **caractérisé par** les étapes suivantes :
- détermination du débit volumique de gaz d'échappement à l'aval du filtre à particules (2), dans le sens de circulation des gaz d'échappement,
- détection de la pression s'instaurant dans le tuyau de gaz d'échappement (1) à l'amont du filtre à particules (2) dans le sens de circulation des gaz d'échappement,
- comparaison du débit volumique de gaz d'échappement déterminé à l'aval du filtre à particules (2), dans le sens de circulation, avec la pression détectée s'instaurant à l'amont du filtre à particules (2) et
- exploitation du résultat de la comparaison en tenant compte de la contre-pression du gaz d'échappement du filtre à particules (2) non chargé et de la contre-pression du gaz d'échappement plus élevé par rapport au filtre non chargé, causée par une charge du filtre à particules.

2. Procédé selon la revendication 1 **caractérisé en ce que** la détermination du débit volumique de gaz d'échappement à l'aval du filtre à particules (2), dans le sens de circulation des gaz d'échappement et la détection de la pression s'instaurant dans le tuyau de gaz d'échappement (1) à l'amont du filtre à particules (2) dans le sens de circulation des gaz d'échappement s'effectuent simultanément ou quasi-simultanément.

3. Procédé selon la revendication 1 ou 2 **caractérisé en ce que** pour déterminer le débit volumique de gaz d'échappement à l'aval du filtre à particules (2), dans le sens de circulation des gaz d'échappement et/ou pour détecter la pression s'instaurant dans le tuyau de gaz d'échappement à l'amont du filtre à particules (2) dans le sens de circulation des gaz d'échappement, plusieurs mesures sont réalisées à chaque fois à un intervalle de temps défini et que la valeur moyenne est à chaque fois utilisée lors de l'exploitation à suivre.

4. Procédé selon la revendication 3 **caractérisé en ce que** la valeur moyenne pondérée est utilisée lors de l'exploitation.

5. Procédé selon l'une des revendications 1 à 4 **caractérisé en ce qu'**il est réalisé, pour déterminer le débit volumique à l'aval du filtre à particules (2), une mesure pour détecter la pression globale et une mesure pour déterminer la pression statique, lesquels résultats de mesures étant utilisés afin de déterminer la pression dynamique qui est fondamentale pour déterminer le débit volumique.

6. Procédé selon l'une des revendications 1 à 5 **caractérisé en ce que** les résultats de la détermination du débit volumique à l'aval du filtre à particules (2) et ceux de la mesure de pression à l'amont du filtre à particules (2) subissent une correction des températures.

7. Procédé selon l'une des revendications 1 à 6 **caractérisé en ce que**, lors de la constatation d'une charge suffisante en suies du filtre à particules, un signal de régénération est produit.

8. Procédé selon la revendication 7 **caractérisé en ce qu'**un processus de régénération destiné à régénérer le filtre à particules est uniquement déclenché si, en plus du signal de régénération correspondant à la charge nécessaire en suies, une ou plusieurs autres conditions de régénération des suies sont remplies.

9. Dispositif de réduction de l'émission de particules d'un moteur à combustion interne, notamment d'un moteur diesel, comprenant un filtre à particules (2) monté dans le tuyau de gaz d'échappement (1) d'un moteur à combustion interne, ainsi qu'un dispositif pour déterminer l'état de charge d'un filtre à particules (2) constitué d'un capteur de pression (3) et constitué d'un capteur de débit volumique (5) disposé à l'aval du filtre à particules (2) dans le sens de circulation des gaz d'échappement, lesquels deux capteurs (3, 5) sont raccordés à des fins d'exploitation des résultats des mesures à une unité de commande (18) **caractérisé en ce que** le capteur de pression (2) est disposé à l'amont du filtre à particules (2) dans le sens de circulation des gaz d'échappement et **en ce que** le capteur de débit volumique (5) comprend un cône de mesure disposé dans le tuyau de gaz d'échappement (1) dont l'axe longitudinal s'étend, dans ce tronçon, parallèlement à l'axe longitudinal du tuyau de gaz d'échappement (1) et qui est orienté avec sa surface de cône contre le sens de circulation des gaz d'échappement, le centre du cône situé dans le sens contraire de la circulation des gaz d'échappement comprenant un point de mesure de la pression dynamique et, dans la zone à l'abri du cône de mesure par rapport à la circulation, un point de mesure de la pression statique.

10. Dispositif selon la revendication 9 **caractérisé en ce que** les points de mesure sont reliés chacun par un canal de mesure (9, 12) avec un capteur de pression (10, 13) disposé à l'extérieur du tuyau de gaz d'échappement (1).

11. Dispositif selon la revendication 10 **caractérisé en ce que** le cône de mesure (6) est maintenu à l'intérieur du tuyau de gaz d'échappement (1) par un corps (14) formant le ou les canaux de mesure (9, 12).

12. Dispositif selon la revendication 11 **caractérisé en ce que** les canaux de mesure (9, 12) sont disposés dans un corps porteur (14) maintenant le cône de mesure dans le tuyau de gaz d'échappement.

13. Dispositif selon l'une des revendications 9 à 12 **caractérisé en ce que** le cône de mesure (6) présente à son extrémité radiale déterminant le diamètre le plus grand, une arête de décrochement (19) efficace du point de vue technique des fluides.
